# EUROPEAN PATENT SPECIFICATION

(11) **EP 0 438 835 B1**
(45) Date of publication and mention of the grant of the patent: **09.06.1993**
(21) Application number: 90203501.3
(22) Date of filing: 24.12.1990
(51) Int. Cl.: F25B 31/00, F04B 39/02, F16N 19/00

(54) **Refrigeration station**
Kälte-Anlage
Installation frigorifique

(30) Priority: 24.01.1990 IT 1914690
(43) Date of publication of application: 31.07.1991
(73) Proprietor: ARNEG S.P.A., I-35010 Marsango di Campo S. Martino, Padua (IT)
(72) Inventor: Schiesaro, Pierluigi, I-35125 Padua (IT)
(74) Representative: De Carli, Erberto

(56) References cited:
- FR-A- 963 541
- GB-A- 2 165 931
- US-A- 4 411 141
- US-A- 4 715 196

## Description

The present invention relates to a cooling station. Centralised cooling plants have cooling stations which are capable of supplying various types of user equipment, such as actual cooling units, cabinets for frozen products and units for displaying and storing such products.

The term cooling station means a system made up of a certain number of compressors mounted on a base frame and appropriately interconnected together by a system of pipes, valve mechanisms, pressure switches, regulators, etc., capable of ensuring its perfect operation and an equalisation of both low and high pressures.

It must also be remembered that the said connections and relative connected devices must guarantee an optimum level of oil for lubricating the various components. Indeed in cooling stations it is known that when a compressor operates it expells a certain amount of oil which depends both on the constructional form of the compressor and on the compression ratio at which the plant is operating. It is thus particularly important that a working compressor is at the same time resupplied with the expelled oil, in order to avoid any oil shortages and relative dangerous failures.

These problems have led to a series of proposals for their solution set out below.

An initial solution equalises the distribution of steam and oil present in the various compressors, which have the same power and comprise the cooling station, by means of separate manifolds for the steam and oil, where valve mechanisms both for the steam and oil must be connected to each compressor.

A second solution, also for a cooling station with compressors of equal power, is to have only one oil manifold connected to them. US-A-4 411 141 discloses a refrigerating apparatus having two compressors connected in parallel between common suction and discharged manifold. An oil separator at the discharge manifold and an oil return line to the suction manifold is shown in document GB-A- 2165931.

All the above solutions, however, fail to offer a choice of combinations of variable power together with an improved exploitation of installed power.

On the basis of these considerations solutions have been proposed concerning cooling stations with several compressors which differ in their power rating so as to offer a wide range of combinations whereby an optimum number of intermediate power values can be obtained suited to variable requirements.

Such an arrangement, however, unlike the previous ones, requires a greater number of valve components which during operation coordinate the redistribution of the separated oil so as to avoid dangerous shortages of the latter in the compressors. In addition to this it must not be forgotten that the pressure must be equalized by means of a relative pipe and appropriate connected valve mechanisms and pressure switches.

Furthermore, the arrangement of these compressors and their operation in set combinations with an induction manifold and the relative valve mechanisms to the compressors, causes suction phenomena of the oil in the induction manifold and, if the appropriate drainage pipes should become blocked, it is the source of failure.

This clearly results in greater complexity of assembly and operation which, in addition to increased cost involves a greater parallel probability of problems.

The aim of the present invention is to create a cooling station with several compressors of a different power which enables safety of operation despite considerable simplification of construction.

A further aim is to obtain a cooling station which is highly simplified and in which the components are reduced to the minimum number possible.

This aim according to the present invention is achieved by creating a cooling station as claimed in claim 1.

A better understanding of the structural and operational characteristics and the advantages of a cooling station according to the present invention shall be gained from the description given by way of example but in no way limiting, referring to the attached schematic drawings in which:

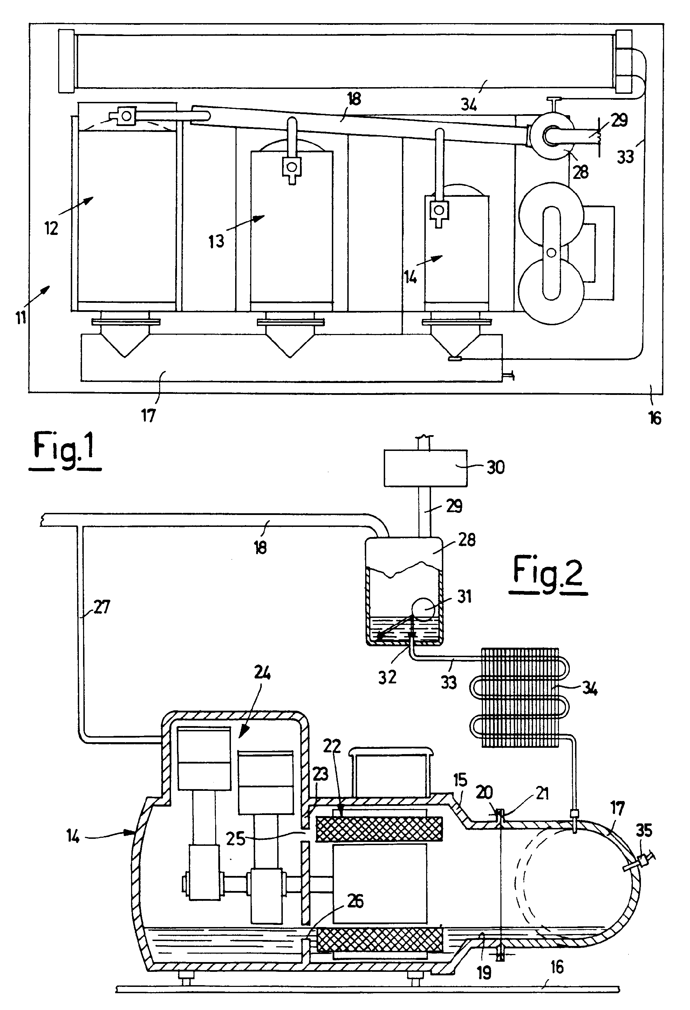

Fig. 1 is a simplified plan view of a cooling station according to the present invention, and Fig. 2 is a cross-section of a compressor and part of the cooling station.

With reference to the Figures, a cooling station according to the present invention is shown as a whole by 11 and envisages in this embodiment, given by way of example but in no way limiting, several compressors of different power 12, 13 and 14 arranged in parallel.

These compressors 12, 13, 14 have their casings 15 fixed to a rigid base frame 16 and are connected by means of inlet openings and outlet openings to an induction or suction manifold 17 and an exhaust or discharge manifold 18 respectively.

Fig. 2 is a cross-section of one of the said compressors, 14 for example, and it will be observed that casing 15 is connected by means of large-diameter induction opening or suction inlet 19, with a flange 20, to a flanged outlet 21 of induction manifold 17.

Inside casing 15 there are in succession a motor means, shown as a whole by 22, with a dividing wall 23 interposed, the compressor being schematically indicated as a whole by 24. It will be observed that dividing wall 23 has at least one pair of ports, of which a first upper port 25 is for the passage of the coolant gas and a second lower port 26 enables the direct passage of oil.

It is also important to point out how both inlet opening 19 and induction manifold 17 are essentially positioned towards the lower part of casing 15 so as to allow a continuous oil bath to form between the inner part of induction manifold 17 and the inner part of compressor casing 15.

Furthermore, according to the present invention induction manifold 17 has a large diameter so that it is alone capable of performing a series of basic functions for the proper operation of the entire cooling station which shall be described in more detail below.

Outlet manifold 18 receives through single minor pipes 27 the compressed fluid and emits it into an oil separator, indicated as a whole by 28, which in its turn is connected by an additional pipe 29 to a condenser, schematically illustrated by 30.

It should also be noted how oil separator 28, for example by means of a float system 31 connected operationally to an outlet 32, in its base, on reaching a set level re-emits the separated oil into a pipe 33 operationally connected at the other end to induction manifold 17. The said pipe 33 is, of course, connected to a heat exchanger 34 to cool the oil which is resupplied to induction manifold 17. To complete the schematic description of the cooling station, 35 indicates an inlet for re-emitting the coolant into the cycle.

As previously stated, it should be pointed out that, according to the present invention, a large-diameter induction manifold has been created such as to perform a series of basic functions for the operation of the cooling station. These functions may be summarised as being, apart from the natural function of an induction manifold, also as that of an oil reserve, oil equaliser and also a coolant equaliser.

Such a construction thus enables the elimination of valve mechanisms and pipes which, as seen, were present in known cooling stations with several compressors of different powers.

The large-diameter induction manifold with general re-emission of the separated oil is capable of eliminating failures due to blocking of the pipes inside the plant.

Advantageously, due precisely to the presence of a single large induction manifold, the coolant pressures are equalised regardless of whether the compressor or compressors are at that moment in operation, a phenonmenon which also enables the oil immediately to take the place of the oil used by the operation linkage of the compressor or compressors in operation.

It is also clear that such an embodiment is particularly advantageous when the compressors used in the cooling station are greater in number than those shown in the example or when the compressors are of equal power.

## Claims

1. A cooling station comprising a plurality (11) of compressors (12,13,14) which are arranged in parallel between a common suction manifold (17) and a common discharge manifold (18), each compressor (12,13,14) having a casing (15) fixed to a rigid base frame (16), each casing (15) having a suction inlet (19), said discharge manifold (18) leading to a condenser (30), characterised in that said common suction manifold (17) is positioned relative to the suction inlet (19) of each compressor (12,13,14) so as to allow a continuous oil bath to form between the inner part of the suction manifold (17) and the inner part of the casing (15), the diameter of the suction manifold (17) being selected so large that the suction manifold serves as an oil reserve and a coolant pressure and oil equaliser, wherein said discharge manifold (18) leads to said condenser (30) via an oil separator (28), at least one connection pipe (33) being provided between the oil separator (28) and the suction manifold (17).

2. A cooling station according to claim 1, characterised in that the compressors (12,13,14) of the said plurality are of a different power.

3. A cooling station according to claim 1, characterised in that the said at least one connection pipe (33) is fitted with a heat exchanger (34).

4. A cooling station according to claim 1, characterised in that inside each casing (15) there is a motor means (22) for each compressor (12,13,14) which is located within a portion of the casing (15) in close connection with the said suction manifold (17), where between the said motor means (22) and the said compressor (12,13,14) there is a wall (23) with at least one pair of ports (25,26), of which a first upper port (25) is for the passage of the coolant gas and a second lower port (26) is for the direct passage of oil.

5. A cooling station according to claim 1, characterised in that the said suction manifold (17) comprises a large-diameter pipe with a plurality of flanged outlets (21) which may be connected to the same number of additional flanges (20) on each casing (15) positioned on a lower part of the latter.

## Patentansprüche

1. Kälteanlage umfassend eine Mehrzahl (11) von Verdichtern (12,13,14), welche parallel zwischen einer gemeinsamen Saugleitung (17) und einer gemeinsamen Austragsleitung (18) angeordnet sind, wobei jeder Verdichter (12,13,14) ein an einem starren Barisrahmen (16) festgelegtes Gehäuse (15) aufweist, wobei jedes Gehäuse (15) einen Saugeinlaß (19) aufweist und die Austragsleitung (18) zu einem verflüssiger (30) führt, dadurch gekennzeichnet, daß die gemeinsame Saugleitung (17) relativ zum Saugeinlaß (19) jedes Verdichters (12,13,14) derart positioniert ist, daß die Ausbildung eines kontinuierlichen Ölbades zwischen dem Innenteil der Saugleitung (17) und dem Innenteil des Gehäuses (15) ermöglicht ist, wobei der Durchmesser der Saugleitung (17) so groß gewählt ist, daß die Saugleitung als Ölreservoir und Ausgleich für den Kühlmitteldruck und das Öl dient, wobei die Austragsleitung (18) zum Verflüssiger (30) über einen Ölabscheider (28) führt, wobei wenigstens eine Verbindungsleitung (33) zwischen dem Ölabscheider (28) und der Saugleitung (17) vorgesehen ist.

2. Kälteanlage nach Anspruch 1, dadurch gekennzeichnet, daß die Verdichter (12,13,14) der Vielzahl an Verdichtern unterschiedliche Leistung aufweisen.

3. Kälteanlage nach Anspruch 1, dadurch gekennzeichnet, daß die wenigstens eine Verbindungsleitung (33) über einen Wärmetauscher (34) führt.

4. Kälteanlage nach Anspruch 1, dadurch gekennzeichnet, daß im Inneren jedes Gehäuses (15) ein Motor (22) für jeden Verdichter (12,13,14) angeordnet ist, welcher in einem Bereich des Gehäuses (15) in naher Verbindung mit der Saugleitung (17) angeordnet ist, wobei zwischen dem Motor (22) und dem Verdichter (12,13,14) eine Wand (23) mit wenigstens einem Paar an Durchtrittsöffnungen (25,26) angeordnet ist, wobei eine erste obere Durchgangsöffnung (25) für den Durchtritt des Kühlgases und eine zweite untere Durchtrittsöffnung (26) für den direkten Durchtritt von Öl vorgesehen ist.

5. Kälteanlage nach Anspruch 1, dadurch gekennzeichnet, däß die Saugleitung (17) ein Rohr großen Durchmessers mit einer Vielzahl von angeflanschten Auslaßöffnungen (21) umfaßt, welche mit derselben Anzahl von zusätzlichen Flanschen (20) verbindbar sind, welche an jedem Gehäuse (15) in einem unteren Bereich desselben positioniert sind.

## Revendications

1. Installation de réfrigération comprenant une pluralité (11) de compresseurs (12, 13, 14) qui sont montés en parallèle entre un collecteur commun d'aspiration (17) et un collecteur commun de sortie (18), chaque compresseur (12, 13, 14) ayant un carter (15) fixé sur un châssis de base rigide (16), chaque carter (15) comportant une entrée d'aspiration (19), ledit collecteur de sortie (18) menant à un condenseur (30), caractérisée en ce que ledit collecteur commun d'aspiration (17) est placé par rapport à l'entrée d'aspiration (19) de chaque compresseur (12, 13, 14) de manière à permettre à un bain d'huile continu de se former entre la partie interne du collecteur d'aspiration (17) et la partie interne du carter (15), le diamètre du collecteur d'aspiration (17) étant choisi assez grand pour que le collecteur d'aspiration serve de réserve d'huile et d'égalisateur de pression de réfrigérant et d'huile, dans lequel ledit collecteur de sortie (18) mène audit condenseur (30) à travers un séparateur d'huile (28), au moins un tuyau de connexion (33) étant prévu entre le séparateur d'huile (28) et le collecteur d'aspiration (17).

2. Installation de réfrigération suivant la revendication 1, caractérisée en ce que les compresseurs (12, 13, 14) de ladite pluralité sont de puissances différentes.

3. Installation de réfrigération suivant la revendication 1, caractérisée en ce qu'au moins ledit tuyau de connexion (33) est prévu avec un échangeur de chaleur (34).

4. Installation de réfrigération suivant la revendication 1, caractérisée en ce qu'à l'intérieur de chaque carter (15), il y a, pour chaque compresseur (12, 13, 14), un dispositif moteur (22) situé dans une partie du carter (15) très proche dudit collecteur d'aspiration (17), dans lequel, entre ledit dispositif moteur (22) et ledit compresseur (12, 13, 14), est prévue une cloison (23) comportant au moins une paire d'ouvertures (25, 26) dont une première ouverture supérieure (25) pour le passage du gaz réfrigérant et une seconde ouverture inférieure (26) pour le passage direct de l'huile.

5. Installation de réfrigération suivant la revendication 1, caractérisée en ce que ledit collecteur d'aspiration (17) comprend un tuyau de grand diamètre comportant une pluralité de sorties à bride (21) qui peuvent être reliées au même nombre de brides additionnelles (20) sur chaque carter (15), situées sur une partie basse de ce dernier.
